# NEUE EUROPÄISCHE PATENTSCHRIFT

(11) **EP 3 230 671 B2**
(45) Veröffentlichungstag und Bekanntmachung des Hinweises auf die Entscheidung über den Einspruch: **27.04.2022**
(45) Hinweis auf die Patenterteilung: 25.12.2019
(21) Anmeldenummer: 14833119.2
(22) Anmeldetag: 08.12.2014
(51) Int. Cl.: F26B 17/08, F26B 21/04, F26B 21/10, F26B 23/00, F26B 23/02

(54) **TROCKNUNGSANLAGE MIT EINEM TROCKNUNGSBEREICH**
DRYING INSTALLATION WITH A DRYING AREA
SYSTÈME DE SÉCHAGE POURVU D'UNE ZONE DE SÉCHAGE

(43) Veröffentlichungstag der Anmeldung: 18.10.2017
(73) Patentinhaber: Stela Laxhuber GmbH, 84323 Massing (DE)
(72) Erfinder: LAXHUBER, Thomas Christian, 84323 Massing (DE); LATEIN, Tobias, 84567 Erlbach (DE)
(74) Vertreter: Rothkopf, Ferdinand
(86) Internationale Anmeldenummer: PCT/DE2014/100432
(87) Internationale Veröffentlichungsnummer: WO 2016/091237

(56) Entgegenhaltungen:
- EP-A1- 0 745 334
- WO-A1-2012/045552
- DE-A1- 3 321 178
- DE-A1- 19 654 093
- FR-A1- 2 953 006
- GB-A- 2 092 729

## Beschreibung

### Hintergrund der Erfindung

Die Erfindung betrifft eine Trocknungsanlage mit einem Trocknungsbereich zum Trocknen von Schüttgut, wie vorgranuliertem Klärschlamm, bei der eine Luft-Abführeinrichtung zum Abführen von Abluft aus dem Trocknungsbereich und eine Luft-Zuführeinrichtung zum Zuführen von Zuluft in den Trocknungsbereich vorgesehen sind.

Aus DE 20 2009 001 935 U1 ist ein Einbandtrockner für die Trocknung von z.B. Holzsägespänen oder Holzsägemehl mit Warmluft bekannt, bei dem der zugehörige Trocknungsbereich in Sektionen unterteilt ist. Zur Energieeinsparung soll ein Teil der Warmluft im Kreislauf geführt werden. Dazu wird Abluft aus dem Trocknungsbereich abgeführt und als Zuluft wieder in den Trocknungsbereich zurückgeführt.

Aus GB 2 092 729 A ist eine Trocknungsanlage bekannt, bei der eine direkte Wärmerückführung innerhalb eines Wärmeübertragers aus einer ersten Luft-Kühlstufe in eine erste Luft-Aufheizstufe vorgesehen ist.

Aus DE 196 54 093 A1 eine Trocknungsanlage mit zweistufiger Auslegung der Trocknung bekannt. Dazu sind ein erster Trockner und ein zweiter Trockner vorgesehen, die vom zu trocknenden Gut nacheinander zu durchlaufen sind. Zum Trocknen ist mittels eines Wärmetauschers erwärmte Zuluft durch den zweiten Trockner geführt und danach als feuchtere und abgekühlte Abluft mittels eines Wärmetauschers wieder erwärmt. Nach dem Erwärmen ist diese Luft als Zuluft dem ersten Trockner zugeführt und von dort als Abluft durch eine Kühlstufe geführt und dort gekühlt. Aus der Kühlstufe ist derart abgekühlte Luft durch den Wärmetauscher und als erwärmte Zuluft wieder in den zweiten Trockner geführt. Dabei ist die Kühlstufe mittels einer Kältemaschine gekühlt, deren Kondensator zugleich der Wärmetauscher ist, mittels dem Wärme auf die abgekühlte Luft übertragen ist, die dann als erwärmte Zuluft in den zweiten Trockner geführt ist.

### Zugrundeliegende Aufgabe

Der Erfindung liegt die Aufgabe zugrunde, eine Trocknungsanlage zu schaffen, mittels der eine besonders energiesparende und zugleich staubarme Trocknung von Schüttgütern möglich ist.

### Erfindungsgemäße Lösung

Diese Aufgabe ist erfindungsgemäß mit einer Trocknungsanlage nach Anspruch 1, mit einem Trocknungsbereich zum Trocknen von Schüttgut, wie Klärschlamm in vorgranulierter Form oder gegebenenfalls auch Sägespänen, gelöst, bei der eine Luft-Abführeinrichtung zum Abführen von Abluft aus dem Trocknungsbereich und eine Luft-Zuführeinrichtung zum Zuführen von Zuluft in den Trocknungsbereich vorgesehen sind, bei der eine Luft-Kühleinrichtung mit einer ersten Luft-Kühlstufe und einer zweiten Luft-Kühlstufe zum Kühlen der Abluft und eine Luft-Aufheizeinrichtung mit einer ersten Luft-Aufheizstufe und einer zweiten Luft-Aufheizstufe zum Aufheizen der Zuluft vorgesehen sind und bei der eine Energie-Rückführeinrichtung zum Rückführen von Energie aus der ersten Luft-Kühlstufe in die erste Luft-Aufheizstufe vorgesehen ist.

Die erfindungsgemäße Luft-Abführeinrichtung ist mit zwei Luft-Kühlstufen versehen. Mittels dieser beiden Luft-Kühlstufen ist es möglich die Abluft derart stark abzukühlen, dass aus dieser Abluft Feuchtigkeit auskondensiert werden kann.

Die aus dem Trocknungsbereich einer Trocknungsanlage für Schüttgut abgeführte Abluft ist natürlich stark mit Feuchtigkeit aufgesättigt und schon daher nicht unmittelbar dazu geeignet ohne spezielle Aufbereitung einfach wieder als Zuluft in den Trocknungsbereich zugeführt zu werden. Erfindungsgemäß wird die Abluft aber derart stark abgekühlt, dass die in ihr enthaltene Feuchtigkeit kondensiert und als Kondenswasser aus den beiden Luft-Kühlstufen abgeführt werden kann.

Danach wird die Abluft erfindungsgemäß durch zwei Luft-Aufheizstufen geführt. Dort wird die Abluft derart stark erwärmt, dass sie als Zuluft wieder in den Trocknungsbereich zugeführt werden kann, um erneut zur Trocknung des dortigen Schüttguts genutzt zu werden.

Der wesentliche Vorteil der derartigen Umluftführung von Abluft aus dem Trocknungsbereich als Zuluft für den Trocknungsbereich liegt darin, dass keine oder nur vergleichsweise wenig Fortluft in die Umgebung der Trocknungsanlage abgeführt zu werden braucht. Diese abzuführende Fortluft wäre nämlich zugleich einerseits stark mit Staub aus dem Trocknungsbereich belastet, andererseits geruchsbelastet und müsste daher entsprechend zunächst gefiltert oder andersartig aufbereitet werden, bevor sie in die Umgebung abgegeben werden könnte.

Gemäß der Erfindung wird darüber hinaus gezielt mittels einer Energie-Rückgewinnungseinrichtung aus der ersten Luft-Kühlstufe Energie abgeführt und diese Energie der ersten Luft-Aufheizstufe zugeführt.

An der ersten Luft-Kühlstufe ist die abgeführte Abluft noch vergleichsweise warm, so dass dort ein vergleichsweise hohes Energiepotential erschlossen werden kann. Diese gewonnene Energie wird gemäß der Erfindung vorteilhaft dazu genutzt, die Abluft nach deren vollständiger Kühlung und Auskondensierung wieder aufzuwärmen. Dazu wird gezielt die Energie an die erste Luft-Aufheizstufe geliefert, an der die zu erwärmende Zuluft noch vergleichsweise kalt ist.

So kann erfindungsgemäß fast die gesamte aus der Abluft abgeführte Energie auch wieder der Zuluft zugeführt werden. Zugleich wird erfindungsgemäß dafür gesorgt, dass nur wenig oder gar keine Fortluft aus dem Trocknungsbereich der Trocknungsanlage an die Umgebung abgeführt zu werden braucht.

An der ersten Luft-Kühlstufe wird erfindungsgemäß bevorzugt die Abluft von 90° auf bis zu 70° Celsius abgekühlt, bevorzugt von 85° auf 75° Celsius. Dabei werden vorteilhaft bis zu 5 Gramm Wasser pro Kilogramm Abluft abgeschieden. An der zweiten Luft-Kühlstufe wird die Abluft dann weiter auf bis zu 45° Celsius, bevorzugt 50° Celsius gekühlt. Dabei werden bis zu 65 Gramm Wasser pro Kilogramm Abluft abgeschieden. An der ersten Luft-Aufheizstufe wird die Zuluft dann vorteilhaft auf 45° bis 55° Celsius aufgeheizt, besonders bevorzugt auf 50° Celsius.

Bei der erfindungsgemäßen Trocknungsanlage ist erfindungsgemäß vorteilhaft die erste Luft-Kühlstufe als ein Rohrwärmetauscher gestaltet, der insbesondere mit einer Kreuz-Gegenstromführung gestaltet ist. Der derartige Wärmetauscher hat sich bei den erfindungsgemäß vorgesehenen Temperaturbereichen als besonders funktionssicher und praktikabel erwiesen. Der Rohrwärmetauscher kann ferner vorteilhaft gereinigt werden, so dass an ihm auch Staub aus der Abluft abgeschieden werden kann. Besonders bevorzugt ist entsprechend die zweite Luft-Kühlstufe ebenfalls als ein Rohrwärmetauscher gestaltet, der insbesondere mit einer Kreuz-Gegenströmführung gestaltet ist.

Ferner ist erfindungsgemäß bevorzugt eine Energie-Abführeinrichtung zum Abführen von Energie aus der zweiten Luft-Kühlstufe zu einer externen Wärmesenke vorgesehen. An der zweiten Luft-Kühlstufe befindet sich die Abluft zwar auf einem niedrigeren Energieniveau als an der ersten Luft-Kühlstufe, dennoch kann aber auch die Abwärme dieser zweiten Luft-Kühlstufe vorteilhaft genutzt werden. Gemäß der erfindungsgemäßen Weiterbildung geschieht dies, indem diese Energie an eine externe Wärmesenke abgegeben wird, etwa eine Gebäudeklimatisierung, einen Fermentationsprozess oder ein Fernwärmenetz.

An der Trocknungsanlage gemäß der Erfindung ist vorzugsweise auch eine Abreinigungseinrichtung zum Abreinigen der ersten und/oder der zweiten Luft-Kühlstufe mittels eines Prozesswassers vorgesehen. Die Abreinigung mit Prozesswasser ist insofern besonders effizient, als das Prozesswasser dann auch zum Weiterleiten der mit ihm aufgenommenen Energie genutzt werden kann.

Erfindungsgemäß ist ferner eine dritte Luft-Kühlstufe vorgesehen, die insbesondere als ein Luftwäscher gestaltet ist. Mit dem Luftwäscher kann ein Großteil der in der Abluft enthaltenen Feuchtigkeit als Wasser rückkondensiert werden. Darüber hinaus wird mit dem Luftwäscher die Abluft besonders gereinigt und der darin enthaltene Staub ausgespült. So kann insbesondere gewährleistet werden, dass keine oder fast keine Fortluft aus der erfindungsgemäßen Trocknungsanlage in deren Umgebung abgeführt zu werden braucht. An der dritten Luft-Kühlstufe wird die Abluft vorteilhaft auf bis zu 35° Celsius, vorteilhaft auf 40° Celsius abgekühlt. Dabei werden bis zu weitere 40 Gramm Wasser pro Kilogramm Abluft abgeschieden. Die derart gekühlte Abluft weist dann lediglich noch einen Feuchtegehalt von weniger als 50 Gramm Wasser pro Kilogramm Luft auf.

Die erste Luft-Aufheizstufe ist erfindungsgemäß bevorzugt ebenfalls als ein Rohrwärmetauscher gestaltet. Auch an der ersten Luft-Aufheizstufe können so die genannten Vorteile hinsichtlich Effizienz der Energieübertragung und Reinigung erzielt werden. Darüber hinaus ergeben sich Kostenvorteile, weil an der Trocknungsanlage dann vergleichsweise viele Gleichteile verbaut werden können.

Die zweite Luft-Aufheizstufe ist vorzugsweise als ein Vorheizer gestaltet, dem Energie aus einer externen Wärmequelle zuzuführen ist. Als externe Wärmequelle dient dabei vorteilhaft eine Heizschlange einer externen Heizung. An der zweiten Luft-Aufheizstufe wird die Zuluft vorzugsweise auf eine Temperatur von ca. 55° Celsius erwärmt.

Darüber hinaus ist erfindungsgemäß bevorzugt eine dritte Luft-Aufheizstufe vorgesehen, die insbesondere als ein Brennheizer gestaltet ist. Mit dem Brennheizer kann die Zuluft auf Temperaturen von 135° bis 280° Celsius und mehr aufgeheizt werden. Mit einer solchen Temperatur kann die Zuluft dann zum Trocknen des Schüttguts wieder unmittelbar dem Trocknungsbereich zugeführt werden.

Schließlich ist an der erfindungsgemäßen Trocknungsanlage vorteilhaft noch eine Luft-Überleiteinrichtung zum Überleiten von gekühlter Abluft aus der Luft-Abführeinrichtung als aufzuheizende Zuluft in die Luft-Zuführeinrichtung vorgesehen. Die Luft-Überleiteinrichtung schafft also das Bindeglied zwischen Abluft und Zuluft, sodass eine Umluftführung entsteht. Alternativ zu dieser Umluftführung kann die erfindungsgemäße Lösung auch dazu genutzt werden, um mit der Energie von Abluft, die als Fortluft abgeschieden wird, jene Energie zu gewinnen, mit der dann Frischluft vorgewärmt wird. Entsprechend ist erfindungsgemäß vorteilhaft auch eine Zumischeinrichtung zum Zumischen der aufgeheizter Zuluft in Frischluft angedacht.

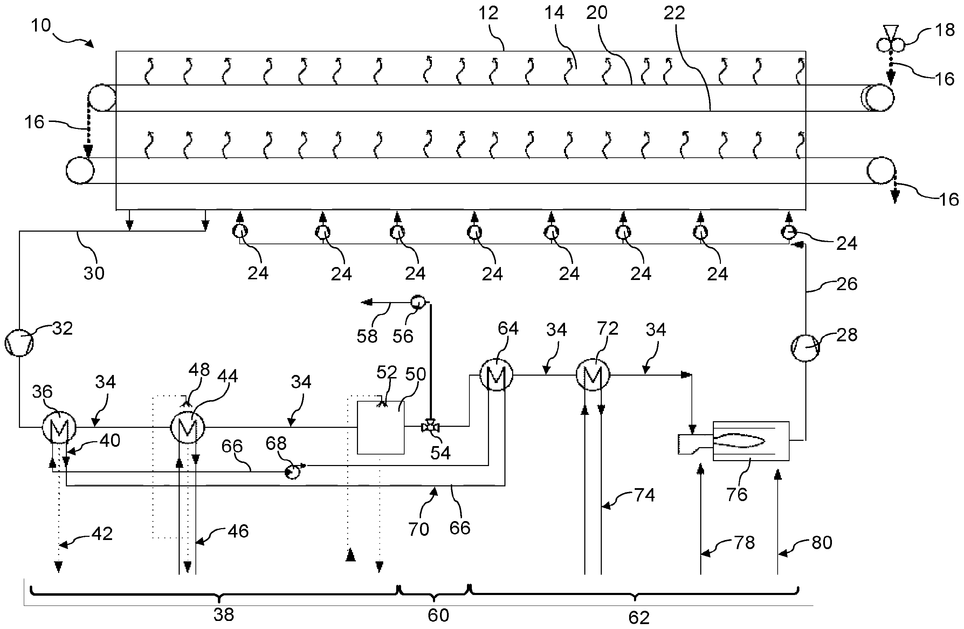

### Kurzbeschreibung der Zeichnung

Nachfolgend wird ein Ausführungsbeispiel der erfindungsgemäßen Lösung anhand der beigefügten schematischen Zeichnung näher erläutert. Es zeigt die Fig. ein Schaltbild eines Ausführungsbeispiels einer erfindungsgemäßen Trocknungsanlage.

### Detaillierte Beschreibung des Ausführungsbeispiels

In der Fig. ist eine Trocknungsanlage 10 veranschaulicht, die mit einem Gehäuse 12 gestaltet ist, mit dem ein Trocknungsbereich 14 für zu trocknendes Schüttgut 16 geschaffen ist. Vor dem Gehäuse 12 befindet sich bezogen auf die Fig. rechts eine Aufgabestation 18 für das zu trocknende Schüttgut 16, vorliegend Klärschlamm in vorgranulierter Form oder ähnliche Produkte. Die Aufgabestation 18 führt das Schüttgut 16 auf ein oberes umlaufendes Trocknungsband 20, mit dem das Schüttgut 16 als Schicht bezogen auf die Fig. von rechts nach links durch den Trocknungsbereich 14 geleitet wird. An der linken Seite des Gehäuses 12 tritt das obere umlaufende Trocknungsband 20 aus dem Trocknungsbereich 14 aus und gibt das Schüttgut 16 an ein sich darunter befindendes, unteres umlaufendes Trocknungsband 22 ab. Das untere umlaufende Trocknungsband 22 befördert das Schüttgut 16 wieder zurück in den Trocknungsbereich 14, durch diesen hindurch und dann an der bezogen auf die Fig. rechten Seite aus dem Gehäuse 12 als getrocknetes Schüttgut 16 heraus

Unter dem Gehäuse 12 befinden sich mehrere Umluft-Ventilatoren 24, mittels denen erwärmte bzw. aufgeheizte Zuluft 26 in den Trocknungsbereich 14 eingeführt und dann in diesem umgewälzt werden kann. Vorliegend sind acht Umluft-Ventilatoren 24 vorgesehen, wobei jeder dieser Umluft-Ventilatoren 24 einem eigenen Teilbereich bzw. einer abgeschlossenen Sektion (nicht im Detail dargestellt) innerhalb des Trocknungsbereichs 14 zugeordnet ist. Die Teilbereiche erstrecken sich über eine jeweilige Teillänge der beiden sich übereinander befindenden Trocknungsbänder 20 und 22. Mittels der Umluft-Ventilatoren 24 werden also beide Trocknungsbänder 20 und 22 mit Zuluft 26 versorgt. Die Zuluft 26 wird mittels eines zentralen Zuluft-Ventilators als Luft-Zuführeinrichtung 28 an den Umluft-Ventilatoren 24 bereitgestellt.

Am bezogen auf die Fig. linken Endbereich des Trocknungsbereichs 14 wird aus dem Gehäuse 12 an zwei zugehörigen Teilbereichen Abluft 30 mit einer Temperatur von ca. 85° C und einem Feuchtegehalt von ca. 150 Gramm Wasser pro Kilogramm Luft aus dem Trocknungsbereich 14 mittels eines zentralen AbluftVentilators als Luft-Abführeinrichtung 32 abgeführt. Diese Abluft 30 wird, wie nachfolgend erläutert wird, wiederverwendet und kann entsprechend als Rekuperationsluft bezeichnet werden. Demgemäß kann der Abluft-Ventilator auch als Rekuperationsventilator bezeichnet werden.

Die Luft-Abführeinrichtung 32 führt die Abluft 30 in einen Luftkanal bzw. eine Luftführung 34, mittels der die Abluft 30 in eine erste Luft-Kühlstufe 36 einer Luft-Kühleinrichtung 38 gelangt. Die erste Luft-Kühlstufe 36 ist als ein Wärmeübertrager bzw. Wärmetauscher gestaltet, der außer der Abluft 30 auch von einem ersten Wärmeträger 40 mit einer Eingangstemperatur von ca. 50° C durchströmt wird. An dem Wärmetauscher kühlt die Abluft 30 ab, wobei sich der Wärmeträger 40 auf eine Ausgangstemperatur von ca. 60° erwärmt und in der Abluft 30 enthaltene Feuchtigkeit zu einem geringen Teil als Kondenswasser abgeschieden wird. Das Kondenswasser wird nach unten hin abgeführt, insbesondere zusammen mit Prozesswasser 42, mittels dem der derartige Wärmetauscher der ersten Luft-Kühlstufe 36 abgereinigt werden kann. An der ersten Luft-Kühlstufe 36 wird die Abluft 30 so auf eine Temperatur von ca. 75° Celsius und einen Feuchtegehalt von ca. 135 Gramm Wasser pro Kilogramm Luft gebracht.

Die Abluft 30 gelangt aus der ersten Luft-Kühlstufe 36 durch die Luftführung 34 weiter in eine zweite Luft-Kühlstufe 44. Die zweite Luft-Kühlstufe 44 ist von einem zweiten Wärmeträger 46 mit einer Eingangstemperatur von ca. 10° C und einer Ausgangstemperatur von ca. 30° C durchströmbar, der die an ihn übertragene Wärme an eine externe Wärmesenke einer Gebäudeheizung weiterleiten kann. Die zweite Luft-Kühlstufe 44 kühlt damit die Abluft 30 auf eine Temperatur unter deren Taupunkttemperatur (ca. 58° C) weiter ab, wodurch weitere enthaltene Feuchtigkeit auskondensiert und als Kondenswasser abgeschieden wird. Die zweite Luft-Kühlstufe 44 ist auch mittels Prozesswasser 42 abzureinigen und weist darüber hinaus vorteilhaft einen Wäscher 48 auf, mittels dem auch die durch ihn strömende Abluft 30 gewaschen und dadurch von darin enthaltenem Staub aus dem zu trocknenden Schüttgut 16 gereinigt werden kann. An der zweiten Luft-Kühlstufe 44 wird die Abluft 30 so auf eine Temperatur von ca. 50° Celsius und einen Feuchtegehalt von ca. 86Gramm Wasser pro Kilogramm Luft gebracht.

Nachfolgend gelangt die bereits an der ersten Luft-Kühlstufe 36 und der zweiten Luft-Kühlstufe 44 gekühlte Abluft 30 zu einer dritten Luft-Kühlstufe 50. Diese dritte Luft-Kühlstufe 50 ist als ein Luftwäscher gestaltet, in dem Prozesswasser 42 mit einer Temperatur von ca. 10° C unmittelbar über und durch die Abluft 30 geregnet wird. Entsprechend wird an dieser dritten Luft-Kühlstufe 50 der Großteil des Restes an Feuchtigkeit aus der Abluft 30 auskondensiert und als Kondenswasser mit dem Prozesswasser 42 abgeschieden. Dazu ist an der dritten Luft-Kühlstufe 50 ein dort dauerhaft betriebener Wäscher 52 vorgesehen. An der dritten Luft-Kühlstufe 50 wird die Abluft 30 so auf eine Temperatur von ca. 40° Celsius und einen Feuchtegehalt von weniger als 50 Gramm Wasser pro Kilogramm Luft gebracht.

In Strömungsrichtung der Abluft 30 betrachtet ist hinter bzw. stromabwärts von der dritten Luft-Kühlstufe 50 in der Luftführung 34 eine Luftklappe bzw. ein Ventil 54 vorgesehen, mit dem optional aus der Luftführung 34 mittels eines Fortluft-Ventilators 56 ein geringer Teil an Abluft 30 mit einer Temperatur von ca. 40° C abgeführt und als Fortluft 58 gegebenenfalls durch einen Filter in die Umgebung der Trocknungsanlage 10 abgegeben werden kann.

Der Hauptstrom der an den drei Luft-Kühlstufen 36, 44 und 50 gekühlten Abluft 30 wird hingegen durch die Luftführung 34 weitergeleitet, die in diesem Bereich als eine Luft-Überleiteinrichtung 60 von der Abluftseite zur Zuluftseite der Trocknungsanlage 10 wirkt. Mit der Luftführung 34 wird die gekühlte und auskondensierte Abluft 30 dabei als Zuluft 26 zu einer Luft-Aufheizeinrichtung 62 geführt, an der sie wieder auf die für eine nachfolgende Trocknung notwendige Temperatur aufgeheizt wird.

Die Luft-Aufheizeinrichtung 62 ist mit einer ersten Luft-Aufheizstufe 64 gestaltet, zu der die für das Aufheizen erforderliche Energie mittels des ersten Wärmeträgers 40 aus der ersten Luft-Kühlstufe 36 transportiert wird. Der erste Wärmeträger 40 wird dazu durch eine Wärmeträgerleitung 66 mittels einer Wärmeträgerpumpe 68 mit einer Temperatur von ca. 60° C von der ersten Luft-Kühlstufe 36 zur ersten Luft-Aufheizstufe 64 hin und mit einer Temperatur von ca. 50° C zurück gefördert. Die Wärmeträgerleitung 66 und die Wärmeträgerpumpe 68 wirken also als eine Energie-Rückführeinrichtung 70. Die Zuluft 26 wird an der ersten Luft-Aufheizstufe 64 auf eine Temperatur von ca. 50° Celsius aufgeheizt.

Zur Luft-Aufheizeinrichtung 62 gehört weiter eine zweite Luft-Aufheizstufe 72, an der die für das Aufheizen der Zuluft 26 erforderliche Energie aus einer externen Wärmequelle, vorliegend einer externen Heizung, mit einem dritten Wärmeträger 74 mit einer Temperatur von ca. 80° C zugeführt wird. Die Zuluft 26 wird hier auf eine Temperatur von ca. 55° Celsius aufgeheizt.

Als dritte Luft-Aufheizstufe 76 ist für die Luft-Aufheizeinrichtung 62 schließlich ein Brennheizer vorgesehen, durch den hindurch die aufzuheizende Zuluft 26 geführt wird und in dem diese dann von einer Flamme erwärmt wird. Dazu werden der dritten Luft-Aufheizstufe 76 sowohl Brennstoff 78 als auch Brennluft 80 zugeführt. Mittels der dritten Luft-Aufheizstufe 76 wird die Zuluft 26 auf eine Temperatur von vorliegend ca. 280°C Celsius aufgeheizt, bevor sie von der Luft-Zuführeinrichtung 28 wieder in den Trocknungsbereich 14 dosiert eingespeist wird.

### Bezugszeichenliste

- 10: Trocknungsanlage
- 12: Gehäuse
- 14: Trocknungsbereich
- 16: Schüttgut
- 18: Aufgabestation
- 20: oberes umlaufendes Trocknungsband
- 22: unteres umlaufendes Trocknungsband
- 24: Umluft-Ventilator
- 26: Zuluft
- 28: Luft-Zuführeinrichtung
- 30: Abluft
- 32: Luft-Abführeinrichtung
- 34: Luftführung
- 36: erste Luft-Kühlstufe
- 38: Luft-Kühleinrichtung
- 40: erster Wärmeträger
- 42: Prozesswasser
- 44: zweite Luft-Kühlstufe
- 46: zweiter Wärmeträger
- 48: Wäscher
- 50: dritte Luft-Kühlstufe
- 52: Wäscher
- 54: Ventil
- 56: Fortluft-Ventilator
- 58: Fortluft
- 60: Luft-Überleiteinrichtung
- 62: Luft-Aufheizeinrichtung
- 64: erste Luft-Aufheizstufe
- 66: Wärmeträgerleitung
- 68: Wärmeträgerpumpe
- 70: Energie-Rückführeinrichtung
- 72: zweite Luft-Aufheizstufe
- 74: dritter Wärmeträger
- 76: dritte Luft-Aufheizstufe
- 78: Brennstoff
- 80: Brennluft

## Patentansprüche

1. Trocknungsanlage (10) mit einem Trocknungsbereich (14) zum Trocknen von Schüttgut (16), wie vorgranuliertem Klärschlamm,
- bei der eine Luft-Abführeinrichtung (32) zum Abführen von Abluft (30) aus dem Trocknungsbereich (14) und eine Luft-Zuführeinrichtung (28) zum Zuführen von Zuluft (26) in den Trocknungsbereich (14) vorgesehen sind,
- bei der eine Luft-Kühleinrichtung (38) mit einer ersten Luft-Kühlstufe (36) und einer zweiten Luft-Kühlstufe (44) zum Kühlen der Abluft (30) vorgesehen ist, wobei die Abluft (30) aus der ersten Luft-Kühlstufe (36) durch eine Luftführung (34) weiter in die zweite Luft-Kühlstufe (44) gelangt, und eine Luft-Aufheizeinrichtung (62) mit einer ersten Luft-Aufheizstufe (64) und einer zweiten Luft-Aufheizstufe (72) zum Aufheizen der Zuluft (26) vorgesehen ist,
- bei der eine Energie-Rückführeinrichtung (70) zum Rückführen von Energie aus der ersten Luft-Kühlstufe (36) in die erste Luft-Aufheizstufe (64) vorgesehen ist,
- bei der die Energie-Rückführeinrichtung (70) als eine Wärmeträgerleitung (66) und eine Wärmeträgerpumpe (68) gestaltet ist, und
- bei der eine dritte Luft-Kühlstufe (50) vorgesehen ist.

2. Trocknungsanlage nach Anspruch 1,
bei der die erste Luft-Kühlstufe (36) als ein Rohrwärmetauscher gestaltet ist, der insbesondere mit einer Kreuz-Gegenstromführung gestaltet ist.

3. Trocknungsanlage nach Anspruch 1 oder 2,
bei der die zweite Luft-Kühlstufe (44) ebenfalls als ein Rohrwärmetauscher gestaltet ist, der insbesondere mit einer Kreuz-Gegenströmführung gestaltet ist.

4. Trocknungsanlage nach einem der Ansprüche 1 bis 3,
bei der eine Energie-Abführeinrichtung zum Abführen von Energie aus der zweiten Luft-Kühlstufe (44) zu einer externen Wärmesenke vorgesehen ist.

5. Trocknungsanlage nach einem der Ansprüche 1 bis 4,
bei der eine Abreinigungseinrichtung zum Abreinigen der ersten und/oder der zweiten Luft-Kühlstufe (36, 44) mittels eines Prozesswassers (42) vorgesehen ist.

6. Trocknungsanlage nach einem der Ansprüche 1 bis 5,
bei der die dritte Luft-Kühlstufe (50) als ein Luftwäscher gestaltet ist.

7. Trocknungsanlage nach einem der Ansprüche 1 bis 6,
bei der die erste Luft-Aufheizstufe (64) als ein Rohrwärmetauscher gestaltet ist.

8. Trocknungsanlage nach einem der Ansprüche 1 bis 7,
bei der die zweite Luft-Aufheizstufe (72) als ein Vorheizer gestaltet ist, dem Energie aus einer externen Wärmequelle zuzuführen ist.

9. Trocknungsanlage nach einem der Ansprüche 1 bis 8,
bei der eine dritte Luft-Aufheizstufe (76) vorgesehen ist, die insbesondere als ein Brennheizer gestaltet ist.

10. Trocknungsanlage nach einem der Ansprüche 1 bis 9,
bei der eine Luft-Überleiteinrichtung (60) zum Überleiten von gekühlter Abluft (30) aus der Luft-Abführeinrichtung (32) als aufzuheizende Zuluft (26) in die Luft-Zuführeinrichtung (28) vorgesehen ist.

## Claims

1. Drying installation (10) having a drying region (14) for drying bulk material (16), such as pre-granulated effluent sludge,
- in which an air removal device (32) for removing exhaust air (30) from the drying region (14) and an air supply device (28) for supplying feed air (26) into the drying region (14) are provided,
- in which an air cooling device (38) having a first air cooling stage (36) and a second air cooling stage (44) is provided for cooling the exhaust air (30), wherein the exhaust air (30) from the first air cooling stage (36) passes through an air guide (34) into the second air cooling stage (44), and an air heating device (62) having a first air heating stage (64) and a second air heating stage (72) is provided for heating the feed air (26),
- in which an energy recovery device (70) for returning energy from the first air cooling stage (36) into the first air heating stage (64) is provided,
- in which the energy recovery device (70) is in the form of a heat carrier line (66) and a heat carrier pump (68) and
- in which a third air cooling stage (50) is provided.

2. Drying installation according to claim 1,
in which the first air cooling stage (36) is in the form of a tubular heat exchanger which in particular is configured with intersecting counter-current guiding.

3. Drying installation according to claim 1 or 2,
in which the second air cooling stage (44) is likewise in the form of a tubular heat exchanger which in particular is configured with intersecting counter-current guiding.

4. Drying installation according to any one of claims 1 to 3,
in which an energy dissipating device for dissipating energy from the second air cooling stage (44) to an external heat sink is provided.

5. Drying installation according to any one of claims 1 to 4,
in which a cleaning device for cleaning the first and/or the second air cooling stage (36, 44) by means of process water (42) is provided.

6. Drying installation according to any one of claims 1 to 5,
in which the third air cooling stage (50) is in the form of an air washer.

7. Drying installation according to any one of claims 1 to 6,
in which the first air heating stage (64) is in the form of a tubular heat exchanger.

8. Drying installation according to any one of claims 1 to 7,
in which the second air heating stage (72) is in the form of a pre-heater to which energy is to be supplied from an external heat source.

9. Drying installation according to any one of claims 1 to 8,
in which there is provided a third air heating stage (76), which in particular is in the form of a combustion heater.

10. Drying installation according to any one of claims 1 to 9,
in which there is provided an air transfer device (60) for transferring cooled exhaust air (30) from the air removal device (32) to the air supply device (28) as feed air (26) which is to be heated.

## Revendications

1. Système de séchage (10) pourvu d'une zone de séchage (14) pour sécher un produit en vrac (16), tel que des boues de curage pré-granulées :
- dans lequel un dispositif d'évacuation d'air (32) est prévu pour évacuer l'air sortant (30) hors de la zone de séchage (14) et un dispositif d'amenée d'air (28) est prévu pour amener de l'air entrant (26) dans la zone de séchage (14) ;
- dans lequel un dispositif de refroidissement d'air (38) avec un premier étage de refroidissement d'air (36) et un deuxième étage de refroidissement d'air (44) est prévu pour refroidir l'air sortant (30), l'air sortant (30) sortant du premier étage de refroidissement d'air (36) arrivant ensuite, en passant à travers un système de guidage d'air (34), dans le deuxième étage de refroidissement d'air (44) et un dispositif de chauffage d'air (62) avec un premier étage de chauffage d'air (64) et un deuxième étage de chauffage d'air (72) étant prévu pour chauffer l'air entrant (26) ;
- dans lequel un dispositif de reflux d'énergie (70) est prévu pour réintroduire l'énergie provenant du premier étage de refroidissement d'air (36) dans le premier étage de chauffage d'air (64) ;
- dans lequel le dispositif de reflux d'énergie (70) est réalisé sous la forme d'une conduite caloporteuse (66) et d'une pompe caloporteuse (68), et
- dans lequel un troisième étage de refroidissement d'air (50) est prévu.

2. Système de séchage selon la revendication 1, dans lequel le premier étage de refroidissement d'air (36) est réalisé sous la forme d'un échangeur thermique tubulaire notamment agencé avec un guide de contre-flux croisé.

3. Système de séchage selon la revendication 1 ou 2, dans lequel le deuxième étage de refroidissement d'air (44) est également réalisé sous la forme d'un échangeur thermique tubulaire notamment agencé avec un guide de contre-flux croisé.

4. Système de séchage selon l'une quelconque des revendications 1 à 3, dans lequel un dispositif d'évacuation d'énergie est prévu pour évacuer l'énergie provenant du deuxième étage de refroidissement d'air (44) vers un dissipateur thermique externe.

5. Système de séchage selon l'une quelconque des revendications 1 à 4, dans lequel un dispositif de nettoyage est prévu pour nettoyer le premier et/ou le deuxième étage de refroidissement d'air (36, 44) à l'aide d'eau de traitement (42).

6. Système de séchage selon l'une quelconque des revendications 1 à 5, dans lequel le troisième étage de refroidissement d'air (50) étant réalisé sous la forme d'un système de lavage d'air.

7. Système de séchage selon l'une quelconque des revendications 1 à 6, dans lequel le premier étage de chauffage d'air (64) est réalisé sous la forme d'un échangeur thermique tubulaire.

8. Système de séchage selon l'une quelconque des revendications 1 à 7, dans lequel le deuxième étage de chauffage d'air (72) est réalisé sous la forme d'un système de préchauffage auquel l'énergie provenant d'une source de chaleur externe est amenée.

9. Système de séchage selon l'une quelconque des revendications 1 à 8, dans lequel un troisième étage de chauffage d'air (76) est prévu, celui-ci étant notamment réalisé sous la forme d'un brûleur.

10. Système de séchage selon l'une quelconque des revendications 1 à 9, dans lequel un dispositif de transfert d'air (60) est prévu pour transférer l'air sortant (30) refroidi provenant du dispositif d'évacuation d'air (32) sous la forme d'air entrant (26) à chauffer dans le dispositif d'amenée d'air (28).
